# EUROPEAN PATENT APPLICATION

(11) **EP 2 385 710 A2**
(43) Date of publication of application: **09.11.2011**
(21) Application number: 11164880.4
(22) Date of filing: 05.05.2011
(51) Int. Cl.: H04Q 9/00

(54) **Fault diagnostics arrangement for electric drive system, and electric drive system**

(30) Priority: 07.05.2010 FI 20105495
(71) Applicant: ABB Oy, 00380 Helsinki (FI)
(72) Inventor: Pasuri, Osmo, 03250 Ojakkala (FI); Keronen, Jorma, 02760 Espoo (FI); Virtanen, Reijo, 01600 Vantaa (FI)
(74) Representative: Kärkkäinen, Veli-Matti

(57) **Abstract**

The present invention relates to industrial electric drives, such as electric drives for turbines in wind power industry or electric drives for solar power industry, and particularly to fault diagnostics for electric drive systems. In a fault diagnostics arrangement of the invention, one of the control boards (36 to 39), (51 to 58), (66 to 77) of the electric drive system serves as a main control board (36), (55), (70), (74) of the electric drive system to which event data of the subsystems (31), (33 to 35), (49 to 50), (64 to 65) are transferred from the control boards (37 to 39), (51 to 54), (56 to 58), (66 to 69) of the subsystems by means of a data transfer medium (40). The fault diagnostics solution of the invention enables to significantly facilitate the analysis of fault logger data in a fault examination situation, for example.

## Description

### Field of the invention

The invention relates to industrial electric drives, such as electric drives for turbines of wind power industry or electric drives for solar power industry, and particularly to fault diagnostics for electric drive systems.

### Background of the invention

Industrial electric drives are used for various applications, such as transport vehicle engines, different process and manufacturing technological devices and in energy industry. As regards transport devices, electric drives may be used in underground railway service or shipping service, for example. In process and manufacturing technology electric drives may be used e.g. in conveyors, mixers or in paper machines, for instance. In energy industry electric drives may be used in turbines of wind power industry or in solar power industry, for example.

The most common types of electric drives are direct current drives and alternating current drives. In direct current applications the current flowing through the field winding of the motor stator generates a magnetic field that is oriented perpendicular to the field generated by the armature coil. This provides a direct current motor with a torque that is easy to adjust in direct current use by changing the armature current and by maintaining a constant exciting current. In direct current use, the armature current also allows the rate of the direct current motor to be adjusted directly.

Electric drives based on alternating current may be further divided into frequency-controlled alternating current drives, flux-vector-controlled alternating current drives and to alternating current drives using direct torque control (DTC). Of these, the alternating current drives based on flux vector control and DTC alternating current drives allow the torque of a three-phase motor to be adjusted, whereas in a frequency-controlled alternating current drive the load on the three-phase motor determines the torque.

Prior art is disclosed in greater detail in the following, with reference to the accompanying figures in which
Figure 1 shows the structure of a prior art electric drive;
Figure 2 shows the structure of an alternative prior art electric drive; and
Figure 3 shows a fault diagnostics arrangement for a prior art electric drive.

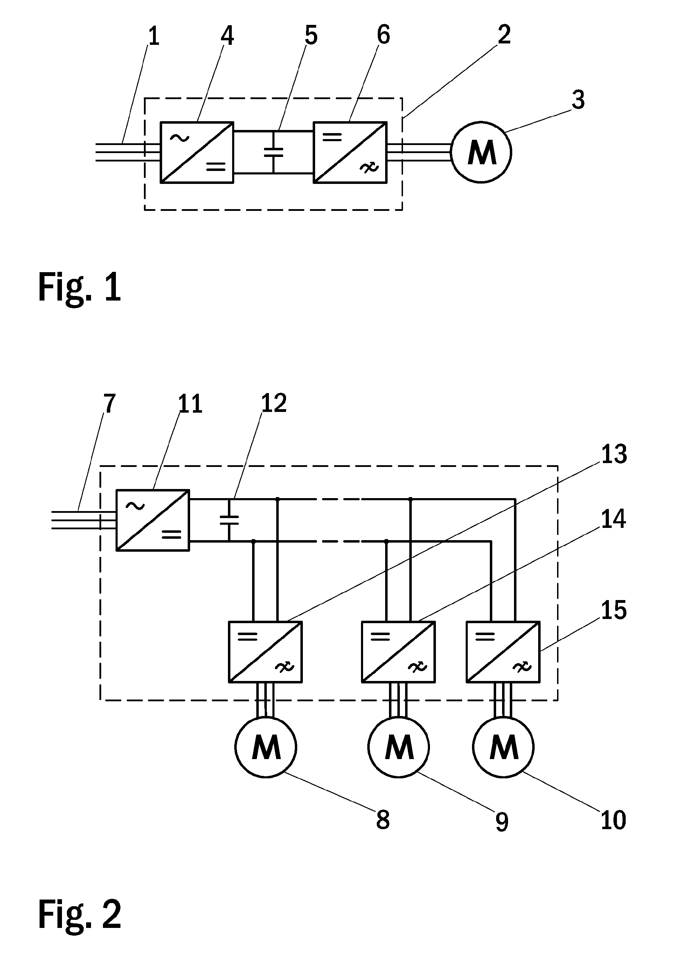

Figure 1 shows the structure of a prior art electric drive. The prior art electric drive comprises a power supply 1, a frequency converter 2 and a load 3. The load 3 may be a motor 3, for example. The frequency converter 2 typically consists of a rectifier unit 4, a direct voltage intermediate circuit 5 and an inverter unit 6. The rectifier unit 4 of the frequency converter 2 converts alternating voltage coming from power supply 1 to direct voltage. The frequency converter 2 may be rectified by a 6-pulse diode bridge, for example. The direct voltage obtained from the rectifier unit 4 of the frequency converter 2 is stored to a direct voltage intermediate circuit 5 serving as an energy storage. Typically, the direct voltage intermediate circuit 5 of the frequency converter 2 may be implemented by means of storage capacitors. From the direct current of the direct voltage intermediate circuit 5 the inverter unit 6 of the frequency converter 2 produces alternating current a desired frequency needed by the motor 3 representing the load. Generally, the inverter unit 6 of the frequency converter 2 may be implemented by means of IGBTs (IGBT, Insulated-gate Bipolar Transistor), for example.

Figure 2 shows the structure of an alternative prior art electric drive. The alternative prior art electric drive comprises a power supply 7 and a load consisting of a number of motors 8, 9, 10. In addition, the alternative electric drive comprises a rectifier unit 11, a direct voltage intermediate circuit 12 and a number of separate inverter units 13, 14, 15. The rectifier unit 11 of the electric drive converts alternating current coming from the power supply 7 to direct voltage, which is stored into the direct voltage intermediate circuit 12 serving as an energy storage. From the direct current of the direct voltage intermediate circuit 12 the separate inverter units 13, 14, 15 of the electric drive produce alternating current of a desired frequency for their respective motors 13, 14, 15 representing the load.

Electric drives are generally used at relative demanding circumstances and often also for critical applications. In fact, one of the main requirements imposed on an electric drive is its operational reliability. If an electric drive is damaged in an uncontrollable manner, in the worst case also the motor representing the load and the machine itself may become damaged and cause a great cumulative damage.

In typical prior art electric drives each device or subsystem has a separate control board to control the operation of the device or subsystem in a fault situation. In the case of a critical fault, the control board shuts the subsystem down and, when less critical faults are concerned, the control board performs a corrective action by changing the control. All faults appearing in the device or the subsystem are recorded into a fault logger of the control board.

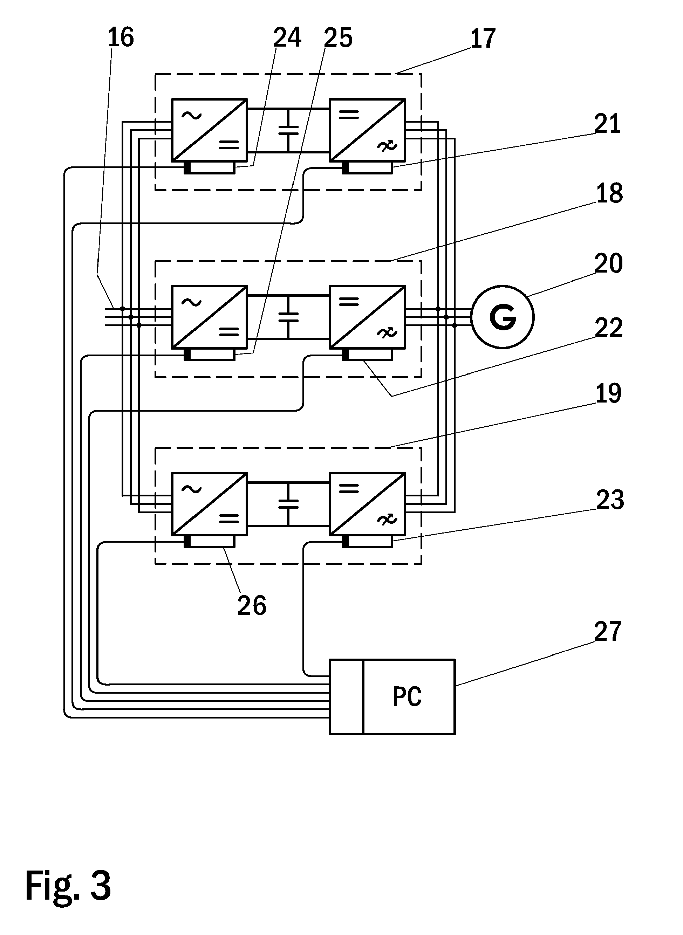

Figure 3 shows a fault diagnostics arrangement for a prior art electric drive. The prior art electric drive comprises three frequency converter units 17, 18, 19 and a generator 20. When the generator 20 is running, the frequency converter units 17, 18, 19 convert the electricity produced by the generator 20 to correspond to the frequency of the mains and supply the electricity thus generated to a network 16. Each of the frequency converter units 17, 18, 19 of the prior art electric drive comprises a rectifier unit, a direct voltage intermediate circuit and an inverter unit. Each inverter unit comprises a separate control board 21, 22, 23 and an inverter-unit-specific fault logger residing on the control board 21, 22, 23. The fault logger on the control board 21, 22, 23 documents all faults, warning and other events in accordance with the prior art. Event history stored in the fault logger of the control board 21, 22, 23 of the inverter unit in the frequency converter can be read by and also copied into a computer afterwards.

In the frequency converter units 17, 18, 19 of the prior art electric drive also each rectifier unit comprises a separate control board 24, 25, 26 and a rectifier-unit-specific fault logger residing on the control board 24, 25, 26. Also the fault logger on the control board 24, 25, 26 of the rectifier unit documents all faults, warnings and other events in accordance with the prior art. Similarly, event history stored in the fault logger of the control board 24, 25, 26 of the rectifier unit in the frequency converter can be read by and also copied into a computer afterwards. Figure shows a computer which in a fault diagnostics situation, for example, may be connected over separate connections to read the fault logger data of the control boards 21, 22, 23 of the inverter unit and also those of the control boards 24, 25, 26 of the rectifier unit.

An element complicating the fault diagnostics arrangement of a prior art electric drive is that in addition to inverter units and rectifier units the electric drive may comprise a number of other subsystems, such as a brake chopper subsystem and/or a liquid cooling plant subsystem. In addition to these subsystems, the electric drive may comprise diverse other subsystems, some of which are not involved in the motor control. Each subsystem thus typically also has a separate subsystem-specific control board and a separate fault logger data file of the control board.

The prior a fault diagnostics arrangement for an electric drive has some major shortcomings. In a fault examination situation, numerous connections are laborious and complicated. Moreover, the prior art fault diagnostics arrangement does not give a reliable picture of the fault situation on the main system level of the electric drive. It has been noticed that in a fault examination situation the fault logger data of the subsystem-specific control boards 21 to 26 are difficult to analyse and place in a chronological order. In a prior art electric drive system it is difficult to conclude how the fault has emerged and advanced and also which part of the electric drive has been damaged and which not.

Consequently, there is clearly a need and demand in industrial electric drive applications for novel fault diagnostics solutions that allow a sufficiently reliable picture of a fault situation to be conveyed on the main system level of the electric drive and facilitate the analysis of fault logger data in a fault examination situation, for example.

### Brief description of the invention

An object of the invention is to provide a novel fault diagnostics arrangement for an electric drive system and an electric drive system for different industrial applications.

The fault diagnostics arrangement of the invention for an electric drive system is characterized in that the electric drive system consists of a plural number of electric drive subsystems and the fault diagnostics arrangement of the electric drive system comprises subsystem control boards, to which event data of the subsystems is stored, one of the control boards of the electric drive system serving as a main control board of the electric drive system and the event data of the subsystems are transferred to the main control board from the control boards of the subsystems by a data transfer medium.

The electric drive system of the invention is characterized in that the electric drive system consists of a plural number of electric drive subsystems and the fault diagnostics arrangement of the electric drive system comprises subsystem control boards, to which event data of the subsystems is stored, one of the control boards of the electric drive system serving as a main control board of the electric drive system and the event data of the subsystems are transferred to the main control board from the control boards of the subsystems by a data transfer medium.

An improved fault diagnostics arrangement for an electric drive system and an improved electric drive system for different industrial applications has now been developed. The solution is characterized by what is stated in the independent claims. Some of the preferred embodiments of the invention are disclosed in the dependent claims.

The present invention enables to achieve a number of advantages, as will become clear from the detailed disclosure. The fault diagnostics arrangement of the invention for an electric drive allows an extremely good and reliable picture of a fault situation to be obtained on the main system level of the electric drive. In addition, with the fault diagnostics arrangement of the invention for an electric drive system enables to facilitate the analysis of the fault logger data in a fault examination situation, for example.

### Brief description of the figures

Figure 1 shows the structure of a prior art electric drive;
Figure 2 shows the structure of an alternative prior art electric drive;
Figure 3 shows a fault diagnostics arrangement for a prior art electric drive;

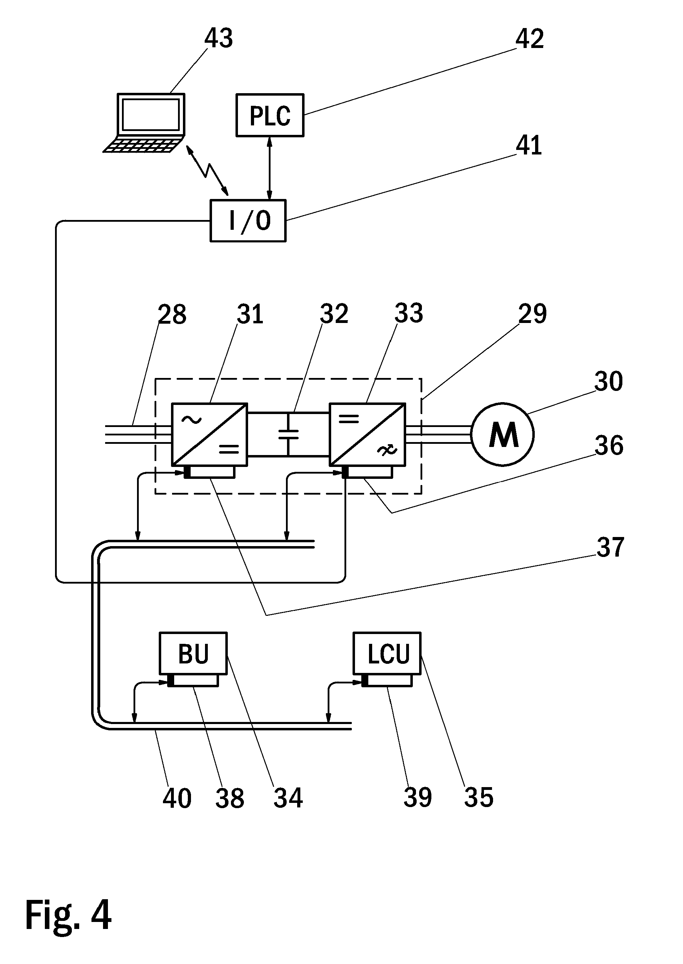

Figure 4 shows a fault diagnostics arrangement for an electric drive of an embodiment of the invention;

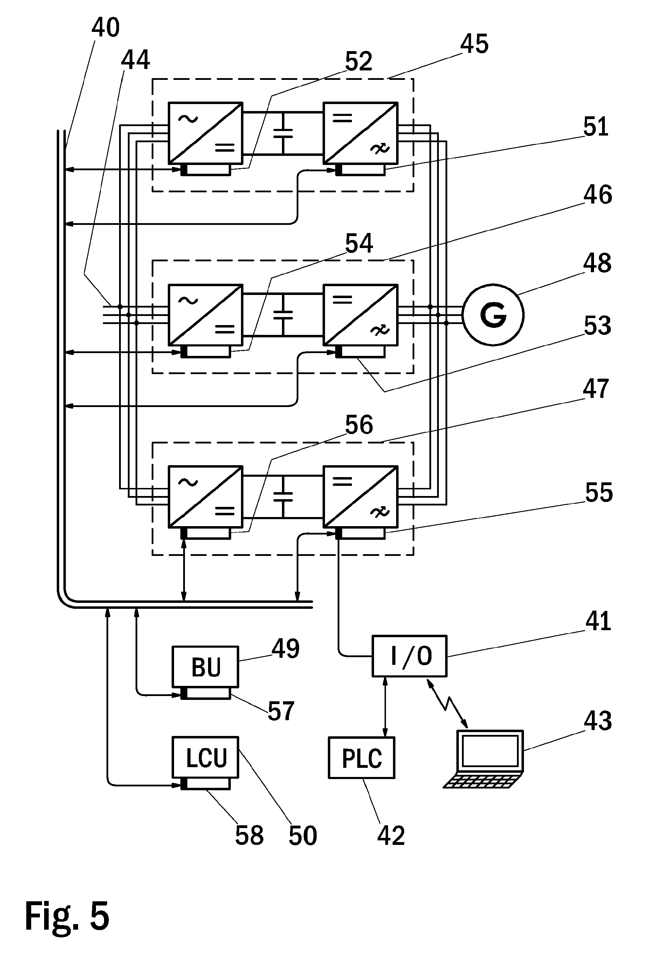

Figure 5 shows a fault diagnostics arrangement for an electric drive of an alternative embodiment of the invention;

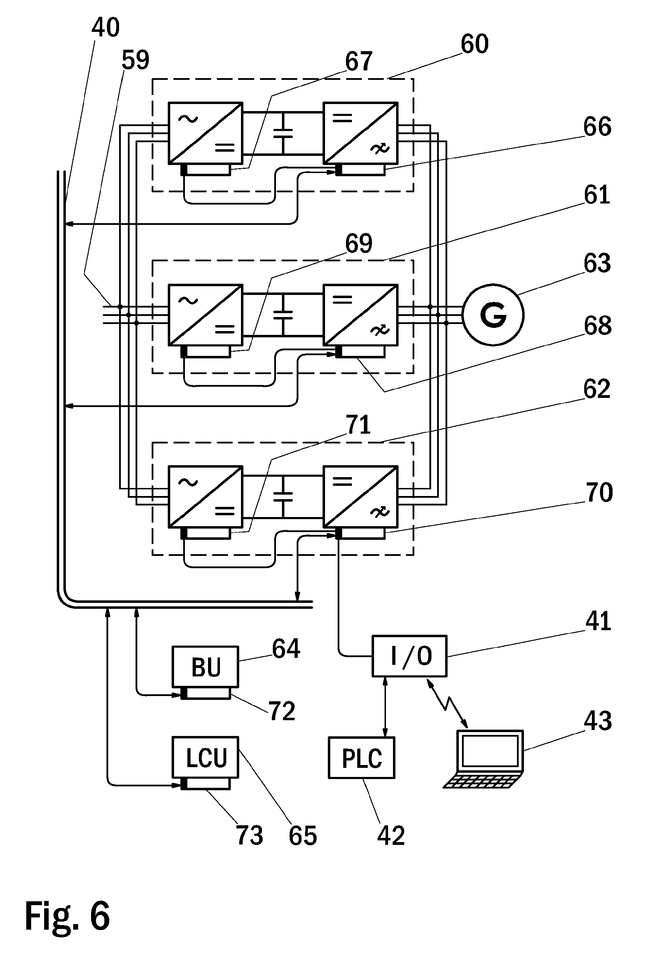

Figure 6 shows a fault diagnostics arrangement for an electric drive of a second alternative embodiment of the invention;

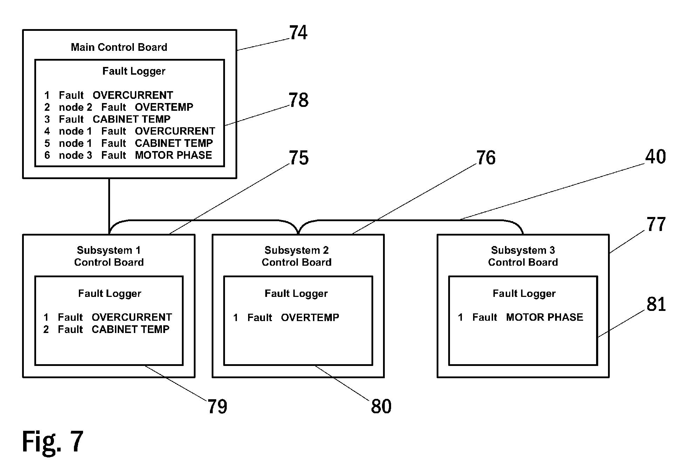

Figure 7 shows the recording of faults in a fault diagnostics arrangement of an electric drive of an embodiment of the invention.

Figures 1 to 3 are described above. In the following, some embodiments of the invention are disclosed in greater detail with reference to preferred embodiments and Figures 4 to 7.

### Detailed disclosure of an embodiment of the invention

Figure 4 shows a fault diagnostics arrangement for an electric drive of an embodiment of the invention. The electric drive of the invention comprises a power supply 28, a frequency converter 29 and a load 30. The load 30 may be a motor 30, for example. The frequency converter 29 consists of a rectifier unit 31, a direct voltage intermediate circuit 32 and an inverter unit 33. The rectifier unit 31 of the frequency converter 29 of the electric drive of the invention converts alternating voltage coming from the power supply 28 to direct voltage. The frequency converter 29 may be rectified by a 6-pulse diode bridge, for example. The direct voltage obtained from the rectifier unit 31 of the frequency converter 29 is stored to a direct voltage intermediate circuit 32 serving as an energy storage. Typically, the direct voltage intermediate circuit 32 of the frequency converter 29 may be implemented by means of a storage capacitor. From the direct current of the direct voltage intermediate circuit 32 the inverter unit 33 of the frequency converter 29 produces alternating current of a desired frequency as required by the motor 30 representing the load. The inverter unit 33 of the frequency converter 29 of the invention may be implemented by means of IGBTs (IGBT, Insulated-gate Bipolar Transistor). The electric drive of the invention further comprises a brake chopper subsystem 34 and a liquid cooling plant subsystem 35.

In the fault diagnostics arrangement of the invention for an electric drive the inverter unit 33 comprises a separate control board 36 and a fault logger residing on the control board 36. Also the rectifier unit 31 comprises a separate control board 37 and a rectifier-unit-specific fault logger residing on the control board 37. The inverter unit 33 and the rectifier unit 31 are subsystems of the electric drive 29. Likewise, the brake chopper subsystem 34 and the liquid cooling plant subsystem 35 comprise separate control boards 38, 39 and unit-specific fault loggers residing on the control boards 38, 39. In addition to the subsystems described in this example, the electric drive of the invention may comprise diverse other subsystems, some of which are not involved in the motor control. Each of these subsystems typically also has a separate subsystem-specific control board and a separate fault logger data file of the control board.

The electric drive fault diagnostics arrangement of the invention also comprises a data transfer medium 40 between the control boards 36 to 39. The data transfer medium 40 between the control boards 36 to 39 may consist of a plural number of separate couplings between the control boards 36 to 39, or the data transfer medium 40 may be a communication bus 40, such as a serial communication bus 40 or an Ethernet-based communication bus 40.

In the electric drive fault diagnostics arrangement of the invention one of the control boards of the electric drive system, for example the control board 36 of the inverter unit 33 serves as the main control board 36 of the electric drive system. In the solution of the invention, the data transfer medium 40 transfers the faults of the subsystems 31, 34, 35 from the subsystem-specific control boards 37 to 39 to the main control board 36 of the electric drive system. Consequently, in the solution of the invention the fault logger on the main control board 36 of the electric drive system is updated also with the event data of the subsystems 31, 34, 35. The control board 36 of the inverter unit 33 serving as the main control board thus comprises an electric-drive-specific fault logger data file that contains the electric-drive-system-specific event data in a chronological order. Alternatively, the control board 36 of the inverter unit 33 serving as the main control board comprises not only the electric-drive-system-specific fault logger data file but also an inverter-unit-specific fault logger data file.

The electric drive fault diagnostics arrangement of the invention further comprises a connection means 41 enabling a field bus connection to the electric drive system for the control board 36 of the inverter unit 33 serving as the main control board. The connection means 41 is typically configured to enable a connection to a programmable logic controller 42 (PLC). The connection means 41 may also be configured to enable a connection to a computer 43. The connection to the computer 43 enabled by the connection means 41 may be a direct connection or, alternatively, a connection implemented over a telecommunications network, such as an Internet connection.

Figure 5 shows a fault diagnostics arrangement for an electric drive of an alternative embodiment of the invention. The electric drive of the invention comprises three frequency converter units 45, 46, 47 and a generator 48. When the generator 48 is running, the frequency converter units 45, 46, 47 convert the electricity produced by the generator 48 to correspond to the frequency of the mains and supply the electricity thus generated to a network 44. Each of the frequency converter units 45, 46, 47 of the electric drive of the invention comprises a rectifier unit, a direct voltage intermediate circuit and an inverter unit. Each inverter unit comprises a separate control board 51, 53, 55. Each rectifier unit also comprises a separate control board 52, 54, 56. The inverter units and rectifier units of the frequency converter units 45, 46, 47 of the electric drive of the invention are subsystems of the electric drive not separately numbered in the figure.

The electric drive of the invention further comprises a brake chopper subsystem 49 and a liquid cooling plant subsystem 50. The brake chopper subsystem 49 comprises a separate control board 57 and, correspondingly, the liquid cooling plant subsystem 50 comprises a separate control board 58. Each control board 51 to 58 comprises a fault logger that documents all faults, warnings and other events. In addition to the subsystems described in this example, the electric drive of the invention may comprise diverse other subsystems, some of which are not involved in the motor control. Each of these subsystems typically has also a separate subsystem-specific control board and a separate fault logger data file of the control board.

In addition, the electric drive fault diagnostics arrangement of the invention comprises a data transfer medium 40 between the control boards 51 to 58. The data transfer medium 40 may be a communication bus 40, such as a serial communication bus 40 or an Ethernet-based communication bus 40.

In the electric drive fault diagnostics arrangement of the invention one of the control boards of the electric drive system, for example the control board 55 of a selected inverter unit serves as the main control board 55 of the electric drive system. In the solution of the invention, the data transfer medium 40 transfers the faults of the subsystems from the control boards 51 to 54, 56 to 58 to the main control board 55 of the electric drive system, the fault logger on the main control board 55 being thus updated also with the event data of the subsystems. The electric drive fault diagnostics arrangement of the invention also comprises a connection means 41 enabling a field bus connection to the electric drive system for the control board 55 of the inverter unit serving as the main control board. The connection means 41 may enable a field bus connection to the programmable logic controller 42 and/or a connection to the computer 43 either directly or over a telecommunications network, such as an Internet connection.

Figure 6 shows a fault diagnostics arrangement for an electric drive according to a second alternative embodiment of the invention. The electric drive of the invention comprises three frequency converter units 60, 61, 62 and a generator 63. When the generator 63 is running, the frequency converter units 60, 61, 62 convert the electricity produced by the generator 63 to correspond to the frequency of the mains and supply the electricity thus generated to the network 59. Each of the frequency converter units 60, 61, 62 of the electric drive of the invention comprises a rectifier unit, a direct voltage intermediate circuit and an inverter unit. Each inverter unit comprises a separate control board 66, 68, 70. Each rectifier unit also comprises a separate control board 67, 69, 71. The inverter units and rectifier units of the frequency converters 60, 61, 62 of the electric drive of the invention are subsystems of the electric drive not separately numbered in the figure.

The electric drive of the invention further comprises a brake chopper subsystem 64 and a liquid cooling plant subsystem 65. The brake chopper subsystem 64 comprises a separate control board 72 and, correspondingly, the liquid cooling plant subsystem 65 comprises a separate control board 73. Each control board 66 to 73 comprises a fault logger that documents all faults, warnings and other events. In addition to the subsystems described in this example, the electric drive of the invention may comprise diverse other subsystems, some of which are not involved in the motor control. Each of these subsystems typically has also a separate subsystem-specific control board and a separate fault logger data file of the control board.

In addition, the electric drive fault diagnostics arrangement of the invention comprises a data transfer medium 40 between the control boards 66 to 73. The data transfer medium 40 may be a communication bus 40, such as a serial communication bus 40 or an Ethernet-based communication bus 40.

In the electric drive fault diagnostics system according to the second alternative embodiment of the invention one of the control boards of the frequency converter units 60, 61, 62, for example the control boards 66, 68, 70 of the inverter units, serve as frequency-converter-specific control boards 66, 68, 70. Likewise, one of the control boards of the electric drive system, for example the control board 70 of a selected inverter unit, serves as the main control board 70 of the electric drive system.

In the electric drive fault diagnostics arrangement according to the second alternative embodiment of the invention faults detected in subsystems of the frequency converter units 60, 61, 62 are transferred from the subsystem-specific control boards, such as the control boards 67, 69, 71 of the rectifier units, to the frequency-converter-unit-specific control boards 66, 68, 70, the fault loggers on the frequency-converter-unit-specific control boards 66, 68, 70 being thus updated also with the event data of the subsystems. Likewise, the transfer medium 40 transfers the frequency-converter-unit-specific fault logger data and the fault data of other subsystems from the frequency-converter-unit-specific control boards 66, 68 of the subsystem level and from the subsystem-specific control boards 72 to 73 to the main control board 70 of the electric drive system, the fault logger on the main control board 70 being thus updated also with the event data of the subsystems. The electric drive fault diagnostics arrangement of the invention also comprises a connection means 41 enabling a field bus connection to the electric drive system for the control board 70 of the inverter unit serving as the main control board. The connection means 41 may enable a field bus connection to the programmable logic controller 42 and/or a connection to the computer 43 either directly or over a telecommunications network, such as an Internet connection.

Figure 7 shows the recording of faults in a fault diagnostics arrangement of an electric drive of an embodiment of the invention. In the fault diagnostics arrangement of an electric drive of the invention, fault data are recorded to fault loggers residing on the control boards. In the figure the main control board is designated by reference numeral 74, the control boards of the subsystems being designated by reference numerals 75 to 77, respectively. Further, in the figure the fault logger of the main control board 74 is designated by reference numeral 78, the fault loggers of the control boards 75 to 77 of the subsystems being designated by reference numerals 79 to 81, respectively. The data transfer medium between the control boards 74 to 77 is designated by reference numeral 40. The data transfer medium 40 between the control boards 74 to 77 may consist of a plural number of separate couplings between the control boards 74 to 77, or the data transfer medium 40 may be a communication bus 40, such as a serial communication bus 40 or an Ethernet-based communication bus 40.

When faults appear in an electric drive according to an embodiment of the invention, the faults are recorded to the fault loggers 79 to 81 of the subsystem control boards 75 to 77 for example as follows:
Control board fault logger of subsystem 1
   1 Fault OVERCURRENT
   2 Fault CABINET TEMP
Control board fault logger of subsystem 2
   1 Fault OVERTEMP
Control board fault logger of subsystem 3
   1 Fault MOTOR PHASE

When faults appear in an electric drive according to an embodiment of the invention, main system faults are recorded to the fault logger 78 of the main system control board 74. In addition, the faults recorded to the fault loggers 79 to 81 of the subsystem control boards 75 to 77 are transferred by the data transfer medium 40 to the fault logger 78 of the main system control board 74. The electric drive fault diagnostics arrangement of the invention allows all system faults to be presented in a chronological order in the fault logger 78 of the control board 74 for example as follows:
Fault logger of the main control board
   1 Fault OVERCURRENT
   2 Subsystem 2 Fault OVERTEMP
   3 Fault CABINET TEMP
   4 Subsystem 1 Fault OVERCURRENT
   5 Subsystem 1 Fault CABINET TEMP
   6 Subsystem 3 Fault MOTOR PHASE

In the electric drive fault diagnostics arrangement of the invention the fault diagnostics messages of the subsystems are transferred to the main control board 74 as an automated system operation. The system is also easier to maintain. Moreover, the fault diagnostics messages contain a time stamp of the event, i.e. of the moment when a fault was detected in a subsystem. Thanks to the invention, a new fault added to a subsystem, for example, does not generate a software change to the main control board. Fault texts relating to each fault, including the fault code to be transferred to the field bus, are also transferred from the subsystems to the software of the main control board 74. The fault code allows the program application residing on the programmable logic controller 42 and/or the computer 43 to identify the fault type.

In the electric drive fault diagnostics arrangement of the invention the subsystems 31, 34, 35, 49, 50, 64, 65 are connected together by the data transfer medium 40 consisting of a common communication bus or separate buses. Upon request, the control boards 37 to 39, 51 to 54, 56 to 58, 67, 69, 71 to 73, 75 to 77 of the subsystems 31, 34, 35, 49, 50, 64, 65 transmit their status data rapidly to the main control board 36, 55, 70, 74 to which the connection medium 41 enabling the field bus connection is coupled. In the electric drive fault diagnostics arrangement of the invention, fault texts relating to each fault, including the fault code to be transferred to the field bus by the connection medium 41, are also transferred from the control boards 37 to 39 of the subsystems 31, 34, 35, 49, 50, 64, 65 to the software of the main control board 36, 55, 70, 74. The fault code allows the program application residing on the programmable logic controller 42 to identify the fault type.

Since the statuses of the subsystems 31, 34, 35, 49, 50, 64, 65 are updated rapidly, also process blocks can be implemented without delay. A fault triggered in a subsystem 31, 34, 35, 49, 50, 64, 65 critical from the process point of view may be interlocked with the shutdown of the entire system in the software of the main control board 36, 55, 70, 74 or the programmable logic controller 42. When a less critical fault appears, the process control may continue under with the control required by the system.

The electric drive fault diagnostics arrangement of the invention allows electric drive diagnostics to be significantly improved by transferring on the system level subsystem faults over a serial communication link or a similar data transfer method to the main control board of the system. This enables a clearly improved total management of an electric drive system.

The solution of the invention provides a novel fault diagnostics arrangement for use in an electric drive system for different industrial electric drive applications, the fault diagnostics solution allowing a sufficiently reliable picture of a fault situation to be conveyed on the main system level of the electric drive and to significantly facilitate analysis of fault logger data in a fault examination situation, for example.

The electric drive fault diagnostics arrangement of the invention may be applied in the energy industry in electric drives of turbines of wind power industry or in solar power industry, for example. The electric drive fault diagnostics arrangement of the invention is also applicable to transport vehicle engines in shipping, for example, to be used in electric drives of ship engines, and to different process and manufacturing technological equipment.

A skilled person will find it obvious that, as technology advances, the basic idea of the invention may be implemented in various ways. The invention and its embodiments are thus not restricted to the above examples but may vary within the scope of the claims. In other words, different features may be omitted, modified or replaced by equivalent ones, and features disclosed in this application may be combined to provide different combinations.

## Claims

1. A fault diagnostics arrangement for an electric drive system, the electric drive system consisting of a plural number of electric drive subsystems (31), (33 to 35), (49 to 50), (64 to 65) and the fault diagnostics arrangement of the electric drive system comprising control boards (36 to 39), (51 to 58), (66 to 77) of the subsystems (31), (33 to 35), (49 to 50), (64 to 65), event data of the subsystems (31), (33 to 35), (49 to 50), (64 to 65) being recorded to the control boards, **characterized in that** one of the control boards (36 to 39), (51 to 58), (66 to 77) of the electric drive system serves as a main control board (36), (55), (70), (74) of the electric drive system to which the event data of the subsystems (31), (33 to 35), (49 to 50), (64 to 65) are transferred from the control boards (37 to 39), (51 to 54), (56 to 58), (66 to 69) of the subsystems by means of a data transfer medium (40).

2. A fault diagnostics arrangement according to claim 1, **characterized in that** the electric drive subsystems (31), (33 to 35), (49 to 50), (64 to 65) comprise one or more of the following systems:
- a rectifier unit (31);
- an inverter unit (33);
- a brake chopper subsystem (34), (49), (64); and/or
- a liquid cooling plant subsystem (35), (50), (65).

3. A fault diagnostics arrangement according to claim 1 or 2, **characterized in that** the electric drive system comprises frequency converter units (60), (61), (62), one or more of the control boards (66 to 71) of the electric drive serving as frequency-converter-unit-specific control boards (66), (68), (70) to which event data of the subsystems of the frequency converter unit are transferred from the subsystem control boards (67), (69), (71) and from the frequency-converter-unit-specific control boards (66), (68) the frequency-converter-unit-specific event data are transferred to the main control board (70) of the electric drive system by means of the data transfer medium (40).

4. A fault diagnostics arrangement according to claim 1, 2 or 3, **characterized in that** the data transfer medium (40) consists of a plural number of separate couplings between the control boards (36-39), (51-58), (66-77) or it is a communication bus (40), a serial communication bus (40) or an Ethernet-based communication bus (40).

5. A fault diagnostics arrangement according to any one of claims 1 to 4, **characterized in that** the fault diagnostics arrangement comprises a connection means (41), the connection means (41) enabling a field bus connection to the electric drive system for the main control board (36), (55), (70), (74).

6. A fault diagnostics arrangement according to claim 5, **characterized in that** the connection means 41 enables a field bus connection to a programmable logic controller (42) and/or a connection to a computer (43).

7. A fault diagnostics arrangement according to claim 6, **characterized in that** the connection to the computer 43 enabled by the connection means 41 is a direct connection, a connection implemented over a telecommunications network or a connection implemented over an Internet connection.

8. A fault diagnostics arrangement according to any one of claims 1 to 7, **characterized in that** the event data are recorded to fault loggers (79 to 81) of the control boards (36 to 39), (51 to 58), (66 to 77).

9. A fault diagnostics arrangement according to any one claims 1 to 8, **characterized in that** the event data also contain a time stamp of the moment when a fault was detected.

10. A fault diagnostics arrangement according to any one of claims 1 to 9, **characterized in that** the event data contain a fault code that enables the programmable logic controller (42) and/or the computer (43) to identify the fault type.

11. A fault diagnostics arrangement according to any one of claims 1 to 10, **characterized in that** on the basis of the event data the programmable logic controller (42) and/or the computer (43) is able to shut down the system or provide the system with the required control.

12. A fault diagnostics arrangement according to any one of claims 1 to 11, **characterized in that** the fault diagnostics arrangement is applied to electric drives of turbines in the wind power industry.

13. A fault diagnostics arrangement according to any one of claims 1 to 11, **characterized in that** the fault diagnostics arrangement is applied to electric drives of solar power industry.

14. A fault diagnostics arrangement according to any one of claims 1 to 11, **characterized in that** the fault diagnostics arrangement is applied to electric drives of ship engines.

15. An electric drive system consisting of a plural number of electric drive subsystems (31), (33 to 35), (49 to 50), (64 to 65), whose fault diagnostics arrangement comprises control boards (36 to 39), (51 to 58), (66 to 77) of the subsystems (31), (33 to 35), (49 to 50), (64 to 65), event data of the subsystems (31), (33 to 35), (49 to 50), (64 to 65) being recorded to the control boards, **characterized in that** one of the control boards (36 to 39), (51 to 58), (66 to 77) of the electric drive system serves as a main control board (36), (55), (70), (74) of the electric drive system to which the event data of the subsystems (31), (33 to 35), (49 to 50), (64 to 65) are transferred from the control boards (37 to 39), (51 to 54), (56 to 58), (66 to 69) of the subsystems by means of a data transfer medium (40).
